# DEMANDE DE BREVET EUROPEEN

(11) **EP 2 256 759 A1**
(43) Date de publication de la demande: **01.12.2010**
(21) Numéro de dépôt: 09305498.9
(22) Date de dépôt: 29.05.2009
(51) Int. Cl.: H01F 41/04, H01F 41/06, G06K 19/077

(54) **Procédé de fixation d'un fil continu sur un substrat et fil ainsi obtenu**

(71) Demandeur: Gemalto SA, 92197 Meudon Cedex (FR)
(72) Inventeur: Leibenguth, Joseph, 92210 Saint - Cloud (FR); Roussel, François, 92330 Sceaux (FR)

(57) **Abrégé**

L'invention concerne un procédé de fixation d'un fil continu (3) sur un substrat (4) selon un parcours prédéterminé, ledit parcours comportant des portions linéaires (L), des zones d'inflexion (Z) bordant ces portions linéaires et des points de fixation (PF) du fil sur le substrat espacés d'un pas (P1, P2) ;

Le procédé se distingue en ce qu'il comporte l'étape d'ajustement du pas (P1, P2), d'une portion linéaire à l'autre, en fonction des longueurs (L1, L2) de chaque portion de manière à ce que lesdites zones d'inflexion (Z) correspondent avec lesdits points de fixation (PF).

L'invention concerne également le fil obtenu et produit électronique comprenant le fil.

## Description

L'invention a pour objet un procédé de fixation d'un fil continu sur un substrat selon un parcours prédéterminé et le fil ainsi obtenu.

Plus particulièrement, l'invention concerne des parcours de fil comportant des portions linéaires, des zones d'inflexion bordant ces portions linéaires et des points de fixation du fil sur le substrat espacés d'un pas correspondant au pas d'avancement d'un outil de fixation.

L'invention trouve notamment application à la réalisation de carte à puce sans-contact et/ou de document de voyage tel que passeport électronique, de visa électronique, étiquette électronique, tout produit électronique de communication comportant une antenne filaire connectée à un composant électronique.

Différentes techniques existent pour la fabrication d'antennes pour des applications radiofréquences (carte à puce, passeport, objets de communication sans contact).

Les techniques principales permettent d'obtenir des antennes gravées, imprimées par sérigraphie, incrustées par sonde thermique ou ultrasonique, prébobinées puis reportées sur un substrat ou brodées.

Toutes ces solutions sont l'une ou l'autre techniquement limitées : limitation de conductivité pour l'antenne imprimée par exemple, difficulté de la manipulation pour l'antenne bobinée, coût élevé pour l'antenne gravée, difficulté de manipulation pour du tissu brodé. En outre, le coût résultant de l'antenne reste relativement élevé par rapport à la matière première mise en oeuvre et les supports ne sont pas toujours bien adaptés à l'utilisation envisagée.

L'invention vise à résoudre les inconvénients précités.

L'invention a d'abord pour objectif d'offrir un procédé flexible de fabrication d'antenne adapté au dispositif final quel que soit la nature du substrat.

L'invention vise également à augmenter considérablement la vitesse de fixation ou de dépose du fil sur un substrat, en apportant de la flexibilité dans le choix du substrat.

Le principe de l'invention consiste selon un mode préféré à dérouler un fil d'antenne rapidement entre des zones remarquables d'inflexion de l'antenne sur un substrat et de fixer ce fil à ces zones remarquables et de préférence uniquement à ces zones.

Selon une caractéristique préférée, le substrat est préparé de manière à recevoir ou faciliter la réception de tout ou partie du fil dans l'épaisseur du substrat. La préparation peut concerner des points ou des zones d'inflexion de fil uniquement et/ou des zones ménagées continues ou discontinues sur le futur parcours du fil entre deux zones d'inflexion.

A cet effet, l'invention a pour objet un procédé de fixation d'un fil continu sur un substrat selon un parcours prédéterminé, ledit parcours comportant des portions linéaires, des zones d'inflexion bordant ces portions linéaires et des points de fixation du fil sur le substrat espacés d'un pas ;

Le procédé se distingue en ce qu'il comporte l'étape selon laquelle le pas entre les points de fixation du fil est ajusté d'une portion à l'autre en fonction des longueurs respectives de chaque portion linéaire de manière à ce que lesdites zones d'inflexion correspondent avec lesdits points de fixation.

Grace à ces dispositions, l'invention est beaucoup plus rapide pour déposer un fil sur un substrat.

Selon d'autres caractéristiques :
- les points de fixation comprennent des perforations dans le substrat, le fil étant maintenu au moins en partie dans chaque perforation, permettant ainsi de loger des moyens de fixation, notamment fil de maintien de couture, boule de soudure, goutte de colle...permettant ainsi, de réaliser une fixation du fil sur une grande variété de matériaux de substrat;
- le procédé comprend la réalisation d'au moins une rainure, ladite rainure s'étendant entre lesdits points et dans l'épaisseur du substrat, partiellement ou totalement, de manière à loger au moins partiellement le fil, permettant ainsi d'escamoter l'épaisseur du fil conducteur ou autre moyen fil de maintien ou de fixation.

Le procédé trouve application de préférence à la réalisation d'antenne radiofréquence sur un substrat, mais il peut servir le cas échéant à tout circuit électrique ou filaire conducteur ou non.

Il permet notamment la réalisation de produit électronique constituant un objet de communication radiofréquence, tel qu'une carte à puce sans contact, un passeport dans lequel le circuit est un circuit d'antenne.

L'invention a également pour objet un fil continu sur un substrat selon un parcours prédéterminé, ledit parcours comportant des portions linéaires, des zones d'inflexion bordant ces portions linéaires et des points de fixation du fil sur le substrat espacés d'un pas. Le fil se distingue en ce que le pas entre des points de fixation du fil est ajusté d'une portion à l'autre en fonction des longueurs respectives de chaque portion linéaire de manière à ce que lesdites zones d'inflexion correspondent avec lesdits points de fixation.

Selon une caractéristique, Le fil conducteur comprend des portions linéaires dont les points de fixation sont espacés d'au moins 1,4 cm, 2 cm, voire 4 ou 5 cm ou plus. On comprend que l'invention permet de fixer rapidement un fil conducteur d'antenne de transpondeur radiofréquence dès l'instant où on permet à la machine d'avoir un pas beaucoup plus important que celui utilisé à ce jour. Aujourd'hui, ce pas est fixe et limité à 2 mm sur tout le parcours d'un fil d'antenne. D'autre part, les coins des antennes formées par broderie sont arrondis notamment pour respecter l'espace inter-spires de l'antenne qui peut être plus réduit à 2 mm, notamment 0,5 mm.

Selon une autre caractéristique, Le fil conducteur vient en contact avec au-moins deux points de fixation chacun situé à un point d'inflexion, mais pour améliorer la tenue et la précision d'écartement des spires lors de la réalisation d'une antenne par exemple, les points de fixation seront espacés d'un pas variable. Ce pas peut allant de 5 mm à 5 cm.

Dès que la longueur de la portion de fil à fixer le permet (grande ligne droite), la machine de fixation peut passer à un pas et/ou une vitesse plus grande de déplacement.

Ce pas variable sur une portion ou entre portions juxtaposés est aussi une caractéristique des capacité de l'invention.

D'autres particularités et avantages de l'invention apparaîtront à la lecture de la description qui suit, donnée à titre d'exemple illustratif et non limitatif, et faite en référence aux figures annexées pour lesquelles :
- la figure 1 illustre une vue schématique d'un transpondeur en cours de formation selon un parcours fléché et selon un mode préféré de mise en oeuvre du procédé de l'invention;
- la figure 2 illustre une vue en coupe selon A-A de la figure 1;
- la figure 3 illustre une vue en coupe selon A-A de la figure 1 selon une première variante de mise en oeuvre;
- la figure 4 illustre une vue en coupe selon A-A de la figure 1 selon une seconde variante de mise en oeuvre.

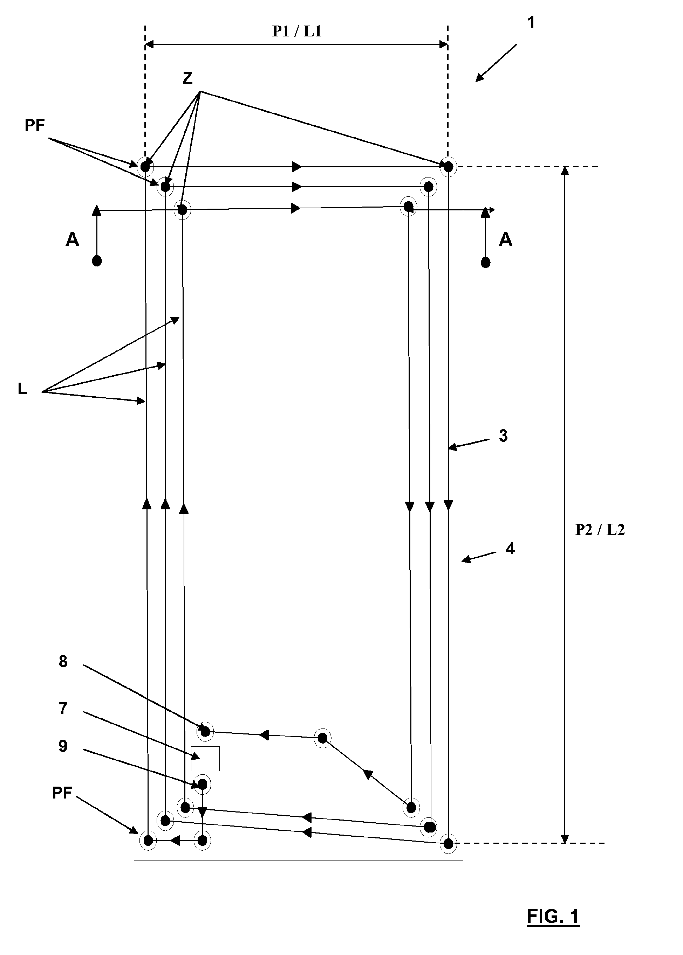

A la figure 1, un produit électronique 1 conforme à l'invention comporte un circuit électrique comportant un fil conducteur 3. Le produit électronique constitue ici un objet de communication radiofréquence, tel qu'une carte à puce sans contact, un passeport dans lequel le circuit est un circuit d'antenne.

Le fil est conducteur continu et s'étend sur un substrat 4 selon un parcours prédéterminé, ici en forme de spirale plate pour former une antenne de transpondeur radiofréquence; Le parcours comporte des portions linéaires (ici des portions de trois spires parallèles à chaque côté du substrat rectangulaire) ; Il comporte aussi des points ou zones d'inflexion (Z) ou de changement de direction bordant ces portions linéaires (L) et des points de fixation (PF) du fil sur le substrat espacés d'un pas P1, P2, ...

Le fil peut être isolé ou non par une gaine isolante, un vernis.

Le fil sur la figure est en formation comme on le voit par les flèches sur chaque portion de fil 3 qui indique aussi le parcours suivi par le fil pour former le circuit d'antenne. On considérera pour simplifier la description que le parcours fléché définit également un fil d'une antenne formée.

Selon une caractéristique de l'invention, le pas P1, P2 de fixation du fil est ajusté d'une portion L1 à l'autre L2 en fonction des longueurs respectives de chaque portion linéaire de manière à ce que lesdits points de fixation correspondent avec les zones d'inflexion (Z).

L'ajustement peut être effectué notamment à la volée en fonction d'un programme de calcul et/ou VAO ou par exemple être préprogrammé à l'avance à des valeurs préétablies.

Ceci est précisé par opposition à la couture ou broderie notamment pour lesquelles le pas est fixe sur un parcours ou du moins en plein milieu d'un parcours. Et en général, le pas est identique d'une portion linéaire à une autre portion linéaire subséquente.

L'invention consiste à augmenter considérablement le pas P1, P2 de fixation jusqu'à correspondre au maximum à la longueur L1, L2 des portions. Dès que la longueur rectiligne du parcours le permet, le pas est susceptible d'être allongé pour aller vite (à l'image des rapports de vitesse de véhicule).

Dans un mode légèrement moins rapide, le pas P1, P2 peut comprendre un point ou plusieurs points intermédiaires selon la longueur des portions. Pour des portions linéaires inférieures à 2 cm, voire 3 ou 4 cm, il n'est pas utile en principe d'avoir des points de fixation intermédiaires, le fil étant bien tenu.

Généralement pour un substrat carte, la plus grande portion peut mesurer environ 6 - 9 cm et la petite portion 3 - 6 cm. Les ponts de fixation sont donc espacés de plus de 2 cm, voire 4 ou 5 cm.

Normalement en couture ou broderie appliquée à la formation d'antenne conductrice, le pas peut comprendre un pas normal d'une amplitude de quelques millimètres (environ 2mm-2,5mm). De préférence, on supprime tous ou quasiment tous les pas intermédiaires de cette amplitude sur une même portion linéaire car ils réduisent d'autant la vitesse de fixation.

Ainsi, l'invention prévoit de faire des sauts d'un angle à l'autre d'un parcours ou circuit conducteur. Ces sauts sont supérieurs en général à 2 cm sur des portions linéaires supérieures à 2 cm.

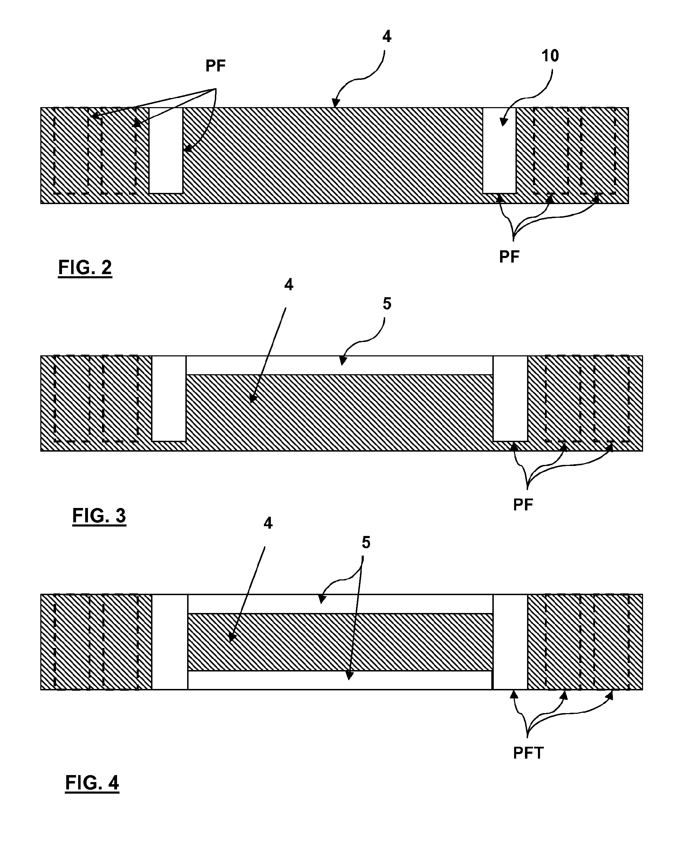

Comme visible plus précisément à la figure 2, selon un mode de réalisation préféré, les points de fixation PF comprennent ou constituent chacun une perforation dans le substrat. La perforation est partielle à travers l'épaisseur du substrat 4 mais elle pourrait déboucher de part et d'autre.

A la figure 3, selon un mode de réalisation, le substrat comporte des rainures ou cannelures 5 sur le parcours et entre les points de fixation PF. Ces cannelures sont destinées à loger tout ou partie de l'épaisseur du fil conducteur continu déposé sur le substrat au cours de la formation du circuit d'antenne.

A la figure 4, selon un mode de réalisation, des rainures ou cannelures 5 sont disposées de part et d'autre du substrat. Cela permet de loger le cas échéant un fil de dessous ou de cannette pour une fixation par couture ou broderie. Les perforations PFT traversent le substrat.

On décrit ci-après un mode préféré de mise en oeuvre du procédé de réalisation du transpondeur de la figure 1.

Selon un mode de réalisation, le procédé de fixation d'un fil conducteur continu sur un substrat selon un parcours prédéterminé, comporte l'étape selon laquelle le pas de fixation du fil est ajusté d'une portion à l'autre en fonction des longueurs respectives de chaque portion linéaire de manière à ce que lesdits points de fixation correspondent avec lesdites zones d'inflexion.

On prévoit selon l'invention une fixation d'un premier point de fil au niveau d'un premier moyen de fixation F du substrat (point de départ 9), puis un guidage linéaire d'une portion L de fil et fixation d'un deuxième point de fil au niveau d'un deuxième point ou moyen de fixation sur le substrat. Et ainsi de suite jusqu'au point final 8.

Selon un premier mode de mise en oeuvre, le support comporte des mires ou repères de calage d'un outil ou tête de fixation d'une machine de fixation. La tête se déplace en étant pilotée par un programme interne de déplacement correspondant au parcours de l'antenne, préétabli et stocké dans une mémoire interne de la machine de fixation.

Selon une alternative de déplacement de l'outil de fixation, un programme dans une machine de fixation met en oeuvre des étapes de variation du pas de fixation en fonction de la longueur linéaire de la portion linéaire. Plus la portion est grande, plus le pas aura tendance à être grand.

La machine comprend également un système de détection des points de fixation préalablement réalisés sur le substrat. Ce peut être un système de vision assisté par ordinateur ou équivalent (VAO). Le pas est déterminé à la volée par la machine.

Un contrôleur de la machine pilote les têtes de fixation de manière à se positionner sur les points de fixation. Le pas de fixation est ensuite changé selon des données du programme ou coordonnées de tous les points de fixation pour s'accommoder de la longueur différente des portions suivantes.

Quand une longueur de portion L1, L2 est inférieure à un pas limite imposé à la machine, le pas de fixation égale cette longueur. Dans le cas contraire, la machine saute directement au point de fixation suivant si celui-ci se trouve à une distance inférieure à une limite de pas de la machine.

Le pas de fixation peut atteindre une limite en longueur due à des contraintes techniques. Dans ce cas, la portion linéaire peut être éventuellement scindée en plusieurs portions sensiblement homogènes.

Quand une longueur de portion est supérieure à une limite de la machine, la longueur peut être scindée en portions inférieures au pas maxi.

Dans l'exemple illustrant le procédé, les points ou moyens de fixation comprennent des perforations (F) dans le substrat, le fil est maintenu au moins en partie dans chaque perforation.

Toutefois, d'autres points ou moyens équivalents sont également envisagés par l'invention :
- Des ilots métalliques préfixés sur le substrat de réception du fil ;
- Des ilots de colle pré-déposés sur le substrat de réception du fil ;
- Des perforations ou trous borgnes cylindriques ou coniques permettant de « coincé » le fil.

En troisième alternative, la machine comporte une tête multiple (comportant par exemple un outil laser, un outil de placement) qui ménage les points et/ou rainures juste avant de placer le fil dedans. Ainsi le parcours est suivi une seule fois par une machine.

Plus précisément, la tête multiple se positionne au dessus du premier point 9 (ou zone d'inflexion Z), une perforation PF est ménagée puis le fil est fixé dedans, puis le fil est déroulé en direction du futur point d'inflexion suivant où l'outil se positionne avant de réaliser une autre perforation PF et fixer dedans le fil tendu et ainsi de suite.

Dans une variante avantageuse, le procédé comprend la réalisation d'au moins une rainure entre les points de fixation ; la rainure s'étend entre lesdits points et dans l'épaisseur du substrat, partiellement ou totalement, de manière à loger au moins partiellement le fil ou faciliter son logement par exemple par lamination ultérieure.

La fixation du fil peut s'effectuer par une technique de broderie ou couture ou équivalent ; L'opération de fixation peut comprendre une introduction d'une aiguille avec une portion de fil dans ladite perforation. Le fil conducteur peut être formé à la manière d'un surfilage de couture ou par broderie avec maintien par un fil de cannette.

Les perforations ou rainures peuvent être effectuées selon une technique choisie parmi la gravure laser, l'usinage, l'estampage, thermoformage, sablage.

Concernant la machine à tête multiple et dans le cas du recours à des rainures, celles-ci peuvent être réalisées juste avant que le fil ne se déroule dedans, l'outil laser (ou équivalent) étant toujours déplacé par la même tête multiple supportant l'outil de placement.

On décrit maintenant un mode pratique de mise en oeuvre du procédé qui prend en considération des contraintes technologiques courantes.

Le concept de base de l'invention permet d'abord de choisir un substrat le plus adapté pour la fabrication d'un dispositif final sans contact : par l'exemple le substrat peut être de type thermoplastique comme PVC, polycarbonate, ou papier synthétique connu sous le nom de « Teslin ».

Le support n'est pas limité à un tissu fin ou à un support acceptant un enfoncement par chaleur ou ultrason comme les thermoplastiques (PVC, Teslin...). Des matériaux durs ou rigides comme du verre, du bois, du papier, du métal, des plaques de circuit imprimé déjà préformées ou perforés, peuvent être envisagés.

Dans une deuxième étape un laser de CO² ou un dispositif de forage (comme l'utilisation dans l'industrie de circuit imprimé) fore des trous de « bord » ou « d'angle » PF représentant la future forme de l'antenne.

Enfin, le fil de cuivre sera déroulé d'un trou PF à l'autre et fixé à l'intérieur de chaque trou avec un processus de couture standard.

Une solution alternative consisterait à ajouter quelques cannelures également fraisées ou gravées au laser afin d'enfoncer le fil de cuivre dans le substrat.

Cette invention peut être employée pour fabriquer un insert ou inlay, la couverture ou la page électronique d'un passeport. On admet généralement que le polycarbonate est un bon substrat pour la fabrication des pages électroniques (eDatapage) pour le passeport.

Avec l'invention, il sera possible de fabriquer une page électronique d'une manière homogène avec seulement l'utilisation du matériau en polycarbonate (sans substrat intermédiaire notamment à base de tissu).

La partie centrale de la page électronique peut consister par exemple en une couche mince de polycarbonate de 50µm.

Cette couche serait d'abord forée au laser et éventuellement gravée par la suite avant que le fil de cuivre soit cousu dessus ou à l'intérieur.

La prochaine étape consiste à réaliser une cavité 7 de réception d'un module électronique comportant une puce électronique sans-contact (non représenté).

Ensuite, le module électronique, fourni généralement au format de bobine, est poinçonné hors du film de bobine (leadframe) et placé dans la cavité susvisée et reliée par thermo compression, soudure ou techniques équivalentes aux deux extrémités du fil d'antenne (8, 9).

L'insert (ou inlay) ainsi réalisé sera assemblé avec d'autres feuilles de polycarbonate (des couches recto et verso et/ou de compensation) et stratifié avec ces feuilles pour former la page électronique.

Un processus semblable peut être appliqué à la fabrication de cartes à puce sans contact généralement réalisées sous forme de feuille (principalement utilisation de plastique de PVC mais aussi aux couvertures électroniques de passeport pour lesquels la matière la plus employée est le papier synthétique appelé Teslin.

Les avantages principaux de cette invention sont :
- La réduction des coûts par la simplification de la machine de fixation du fil (câblage ou couture) et augmentation de la productivité du fait de l'absence d'une opération d'enfoncement du fil par ultrasons, par chaleur ou par fixation via une couture ou broderie fonctionnant traditionnellement avec un pas réduit de quelques millimètres en quelques millimètres, ainsi que par la réduction du nombre de points de fixation.
- Une compatibilité du procédé avec une grande variété de matériaux de substrat qui permet d'employer le même substrat que celui le plus couramment utilisé à ce jour pour les dispositifs sans contact.

Des solutions ou perfectionnements alternatifs peuvent comprendre :
- la fourniture de parties du substrat avec des trous et rainures déjà moulés ;
- une utilisation de technologie de fixation par soudure à l'or comme alternative à la couture (exemple: capillaire, « flammèche » pour produire une boule de blocage du fil dans un trou, boule de soudure noyée dans un trou, etc.)

## Revendications

1. Procédé de fixation d'un fil continu (3) sur un substrat (4) selon un parcours prédéterminé, ledit parcours comportant des portions linéaires (L), des zones d'inflexion (Z) bordant ces portions linéaires et des points de fixation (PF) du fil sur le substrat espacés d'un pas (P1, P2),
**caractérisé en ce qu'**il comporte l'étape selon laquelle le pas (P1, P2) est ajusté d'une portion linéaire à l'autre en fonction des longueurs (L1, L2) de chaque portion de manière à ce que lesdites zones d'inflexion (Z) correspondent avec lesdits points de fixation (PF).

2. Procédé selon la revendication précédente,
**caractérisé en ce que** lesdits points de fixation (PF) comprennent des perforations (10) dans le substrat, le fil étant maintenu au moins en partie dans chaque perforation.

3. Procédé selon l'une des revendications précédentes, **caractérisé en ce qu'**il comprend la réalisation d'au moins une rainure (4, 5), ladite rainure s'étendant entre lesdits points (PF) et dans l'épaisseur du substrat, partiellement ou totalement, de manière à loger au moins partiellement le fil.

4. Procédé selon l'une quelconque des revendications précédentes, **caractérisé en ce que** la fixation du fil s'effectue par une technique de broderie ou couture ou équivalent, l'opération de fixation comprenant une introduction d'une aiguille et une portion de fil dans ladite perforation.

5. Procédé selon l'une quelconque des revendications précédentes, **caractérisé en ce que** les perforations ou rainures sont effectuées selon une technique choisie parmi la gravure laser, l'usinage, l'estampage, thermoformage, sablage.

6. Application du procédé selon l'une quelconque des revendications précédentes à la réalisation d'antenne radiofréquence sur un substrat ou un circuit électrique.

7. Fil conducteur continu sur un substrat (4) selon un parcours prédéterminé, ledit parcours comportant des portions linéaires (L), des zones d'inflexion (Z) bordant ces portions linéaires et des points de fixation (PF) du fil sur le substrat espacés d'un pas (P1, P2),
**caractérisé en ce que** le pas est ajusté d'une portion à l'autre en fonction des longueurs (L1, L2) respectives de chaque portion linéaire de manière à ce que lesdites zones d'inflexion (Z) correspondent avec lesdits points de fixation (PF).

8. Fil conducteur selon la revendication précédente, **caractérisé en ce que** les points de fixation (PF) comprennent chacun une perforation (10) dans le substrat.

9. Fil conducteur selon l'une quelconque des revendications 7 à 8, **caractérisé en ce que** des portions contiennent des points de fixation espacés d'au moins 1,4 cm, voire 4 ou 5 cm.

10. Fil conducteur selon l'une quelconque des revendications 7 à 9, **caractérisé en ce que** le fil maintenu par un procédé de couture ou broderie.

11. Produit électronique comportant un circuit électrique comportant le fil conducteur selon l'une quelconque des revendications 7 à 10 ou obtenu selon l'application de la revendication 6.

12. Produit électronique selon la revendication précédente constituant un objet de communication radiofréquence, tel qu'une carte à puce sans contact, un passeport dans lequel le circuit est un circuit d'antenne.
